# EUROPÄISCHE PATENTSCHRIFT

(11) **EP 3 056 708 B1**
(45) Veröffentlichungstag und Bekanntmachung des Hinweises auf die Patenterteilung: **19.04.2017**
(21) Anmeldenummer: 16154239.4
(22) Anmeldetag: 04.02.2016
(51) Int. Cl.: F01N 13/18, B60K 13/04

(54) **ABSTÜTZEINHEIT ZUR ABSTÜTZUNG EINER ABGASANLAGE EINES FAHRZEUGS**
SUPPORT ASSEMBLY FOR SUPPORTING AN EXHAUST GAS SYSTEM OF A VEHICLE
ENSEMBLE SUPPORT D'INSTALLATION DE GAZ D'ECHAPPEMENT DE VEHICULE AUTOMOBILE

(30) Priorität: 10.02.2015 DE 102015101846
(43) Veröffentlichungstag der Anmeldung: 17.08.2016
(73) Patentinhaber: Eberspächer Exhaust Technology GmbH & Co. KG, 66539 Neunkirchen (DE)
(72) Erfinder: Spieth, Arnulf, 73269 Hochdorf (DE)
(74) Vertreter: RLTG

(56) Entgegenhaltungen:
- DE-A1- 19 815 705
- DE-A1-102005 003 938
- US-B2- 8 833 502

## Beschreibung

Die vorliegende Erfindung betrifft eine Abstützeinheit, vermittels welcher eine Abgasanlage eines Fahrzeugs bezüglich des Fahrzeugs, insbesondere einer Antriebseinheit desselben, abgestützt bzw. getragen werden kann.

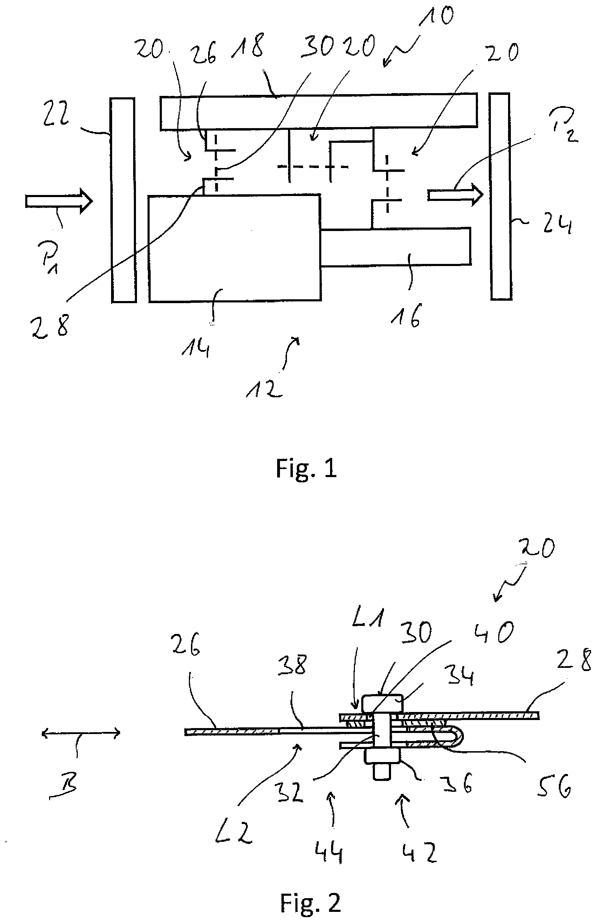

Die Fig. 1 zeigt in prinzipartiger Darstellung ein Antriebssystem 10 eines Fahrzeugs. Das Antriebssystem 10 umfasst eine Antriebseinheit 12 mit einer Brennkraftmaschine 14 und einem mit der Brennkraftmaschine 14 gekoppelten Getriebe 16. Die im Verbrennungsbetrieb der Brennkraftmaschine 14 generierten Verbrennungsabgase werden durch eine allgemein mit 18 bezeichnete Abgasanlage von der Brennkraftmaschine 14 weg geführt. Die Abgasanlage 18 kann beispielsweise einen an die Brennkraftmaschine 14 angeschlossenen Abgaskrümmer umfassen bzw. über diesen an die Brennkraftmaschine 14 angebunden sein.

Insbesondere bei Frontmotorfahrzeugen ist die Antriebseinheit 12 zusammen mit der bzw. einem Teil der Abgasanlage 18 in Fahrtrichtung vor einer den Fahrzeuginnenraum vom Motorraum trennenden Stirnwand 24 angeordnet. Die Abgasanlage 18 ist dabei im vorderen Fahrzeugbereich durch mehrere Abstützeinheiten 20 bezüglich der Antriebseinheit 12 und somit bezüglich des verbleibenden Fahrzeugs abgestützt, d.h. daran getragen. Auch können verschiedene Bereiche der Abgasanlage 18 selbst durch eine oder mehrere derartige Abstützeinheiten 20 bezüglich einander abgestützt sein, um eine Versteifung bzw. eine erhöhte Stabilität in der Abgasanlage 18 selbst zu erreichen. Die Abgasanlage 18 kann dabei beispielsweise mehrere zum Teil auch gekrümmt verlaufende Abgasrohre bzw. einen Katalysatorbereich oder/und Schalldämpferbereich und dergleichen umfassen.

Bei einem Aufprall eines Hindernisses 22 in Richtung eines Pfeils P₁ auf ein Fahrzeug, insbesondere den Frontbereich eines Fahrzeugs, beaufschlagt das Hindernis 22 die Antriebseinheit 12 und verlagert diese in Richtung auf die Stirnwand 24 zu. Aufgrund der im Wesentlichen starren Kopplung der Abgasanlage 18 mit der Antriebseinheit 12 über die Abstützeinheiten 20 verlagert sich auch die Abgasanlage 18, insbesondere der im Motorraum angeordnete Bereich derselben, in Richtung eines Pfeils P₂ auf die Stirnwand 24 zu. Da die im Allgemeinen eingesetzten Abstützeinheiten 20 aus Stahlblechmaterial aufgebaut sind, besteht grundsätzlich die Gefahr, dass die von der Antriebseinheit 12 in Richtung auf die Stirnwand 24 zu mitgenommene Abgasanlage 18 in die Stirnwand 24 eindringt bzw. diese durchdringt und somit erhebliche Schäden und Verletzungen im Fahrzeuginnenraum auslösen kann.

Eine Abstützeinheit gemäß dem Oberbegriff des Anspruchs 1 ist aus den US 8 833 502 B2 bekannt. Bei dieser bekannten Abstützeinheit ist ein erstes Anbindungselement U-förmig gebogen und weist in einander gegenüberliegenden Bereichen seiner beiden U-Schenkel Öffnungen zum Hindurchführen eines das erste Anbindungselement mit einem zweiten Anbindungselement verbindenden Kopplungsorgans auf.

Die DE 10 2005 003 938 A1 offenbart eine Abstützeinheit zum Befestigen einer Abgasanlage, bei welcher in einem der Anbindungselemente dieser Abstützeinheit langlochartige Hinterschneidungsbereiche ausgebildet sind, und in einem anderen der Anbindungselemente dieser Abstützeinheit Langlöcher ausgebildet sind, deren Erstreckungsrichtung zu der Erstreckungsrichtung der langlochartigen Hinterschneidungsbereiche im Wesentlichen quer orientiert ist. Durch einerseits in die langlochartigen Hinterschneidungsbereiche eingreifende und andererseits die Langlöcher durchsetzende Befestigungsbolzen können die beiden Anbindungselemente aneinander festgelegt werden.

Es ist die Aufgabe der vorliegenden Erfindung, eine Abstützeinheit zur Abstützung einer Abgasanlage eines Fahrzeugs vorzusehen, mit welcher eine erhöhte Sicherheit für die in einem Fahrzeug sich befindenden Personen im Falle eines Aufpralls erreicht werden kann.

Erfindungsgemäß wird diese Aufgabe gelöst durch eine Abstützeinheit zur Abstützung einer Abgasanlage eines Fahrzeugs, umfassend ein erstes Anbindungselement, ein zweites Anbindungselement und wenigstens ein das erste Anbindungselement mit dem zweiten Anbindungselement koppelndes Kopplungsorgan, wobei in Zuordnung zu dem wenigstens einen Kopplungsorgan im ersten Anbindungselement eine erste Kopplungsorgandurchgriffsöffnung vorgesehen ist und im zweiten Anbindungselement eine zweite Kopplungsorgandurchgriffsöffnung vorgesehen ist und wobei das wenigstens eine Kopplungsorgan die diesem zugeordnete erste Kopplungsorgandurchgriffsöffnung und zweite Kopplungsorgandurchgriffsöffnung durchsetzt, wobei wenigstens bei dem ersten Anbindungselement in einem ersten Längenbereich wenigstens einer ersten Kopplungsorgandurchgriffsöffnung ein Kopplungsorganklemmbereich vorgesehen ist und in einem zweiten Längenbereich dieser ersten Kopplungsorgandurchgriffsöffnung ein Kopplungsorganklemmfreigabebereich vorgesehen ist, wobei der Kopplungsorganklemmbereich eine größere Dicke aufweist als der Kopplungsorganklemmfreigabebereich.

Bei einer erfindungsgemäß ausgestalteten Abstützeinheit haben, bedingt durch die Bewegbarkeit des wenigstens einen Kopplungsorgans in wenigstens einer dieses aufnehmenden Kopplungsorgandurchgriffsöffnung, die beiden Anbindungselemente die Möglichkeit, sich relativ zueinander zu bewegen. Im Falle einer Krafteinwirkung, beispielsweise bei einem Aufprall auf ein Hindernis, kann somit eine vermittels einer oder mehrerer derartiger Abstützeinheiten getragene Abgasanlage beispielsweise von einer Antriebseinheit eines Fahrzeugs entkoppelt werden, sodass die Gefahr, dass die Abgasanlage in den Bereich eines Fahrzeuginnenraums eindringt, gemindert wird.

Um das Ausmaß der Relativbewegbarkeit der beiden Anbindungselemente möglichst groß gestalten zu können, wird vorgeschlagen, dass die wenigstens eine erste Kopplungsorgandurchgriffsöffnung ein Langloch ist, und dass der erste Längenbereich und der zweite Längenbereich in einer Langloch-Längsrichtung aufeinander folgen.

Die Dickenvariationen zwischen dem Kopplungsorganklemmbereich und dem Kopplungsorganklemmfreigabebereich kann in einfacher Art und Weise dadurch realisiert werden, dass das erste Anbindungselement im Kopplungsorganklemmbereich mit größerer Materialstärke ausgebildet ist als im Kopplungsorganklemmfreigabebereich.

Diese Materialstärkenänderung kann in besonders einfacher Art und Weise dadurch erreicht werden, dass das erste Anbindungselement zum Bereitstellen des Kopplungsorganklemmbereichs wenigstens einmal gefaltet ist.

Um bei der Bereitstellung der Materialstärkenänderung durch Falten den Übergang von einem dickeren Bereich zu einem dünneren Bereich neben wenigstens einer Kopplungsorgandurchgriffsöffnung bereitstellen zu können, wird vorgeschlagen, dass an dem ersten Anbindungselement wenigstens ein durch Falten neben einer ersten Kopplungsorgandurchgriffsöffnung positionierter Faltabschnitt zum Bereitstellen des Kopplungsorganklemmbereichs vorgesehen ist.

Eine auch für größere Belastungen geeignete Kopplungsstärke zwischen den beiden Anbindungselementen kann dadurch gewährleistet werden, dass im ersten Anbindungselement eine Mehrzahl von ersten Kopplungsorgandurchgriffsöffnungen vorgesehen ist, wobei vorzugsweise die ersten Kopplungsorgandurchgriffsöffnungen bezogen auf eine Kopplungsorgan-Bewegungsrichtung vom Kopplungsorganklemmbereich zum Kopplungsorganklemmfreigabebereich nebeneinander angeordnet sind. Insbesondere kann dabei zwischen wenigstens zwei ersten Kopplungsorgandurchgriffsöffnungen ein Faltabschnitt positioniert sein.

Eine erfindungsgemäße Abstützeinheit kann in besonders einfacher und kostengünstiger Art und Weise dadurch hergestellt werden, dass wenigstens das erste Anbindungselement als Blechteil bereitgestellt ist.

Die vorliegende Erfindung betrifft ferner ein Antriebssystem für ein Fahrzeug, umfassend eine Antriebseinheit mit einer Brennkraftmaschine und eine Verbrennungsabgase von der Brennkraftmaschine weg führende Abgasanlage, ferner umfassend wenigstens eine erfindungsgemäß aufgebaute Abstützeinheit.

Um dabei eine oder mehrere Abstützeinheiten möglichst vielfältig einsetzen zu können, wird vorgeschlagen, dass wenigstens eine Abstützeinheit zur Abstützung der Abgasanlage bezüglich der Brennkraftmaschine angeordnet ist, oder/und dass die Antriebseinheit ein Getriebe umfasst und wenigstens eine Abstützeinheit zur Abstützung der Abgasanlage bezüglich des Getriebes angeordnet ist, oder/und dass wenigstens eine Abstützeinheit zur Abstützung eines ersten Bereichs der Abgasanlage bezüglich eines zweiten Bereichs der Abgasanlage angeordnet ist.

Da bei einem Aufprall eines Fahrzeugs auf ein Hindernis die Krafteinwirkungsrichtung häufig im Wesentlichen in einer Fahrzeuglängsrichtung orientiert ist, wird weiter vorgeschlagen, dass bei wenigstens einer Abstützeinheit eine Kopplungsorgan-Bewegungsrichtung vom Kopplungsorganklemmbereich zum Kopplungsorganklemmfreigabebereich im Wesentlichen einer Fahrzeuglängsrichtung eines das Antriebssystem aufweisenden Fahrzeugs entspricht. Auf diese Art und Weise kann das in einer erfindungsgemäß aufgebauten Abstützeinheit bereitgestellte Bewegungsausmaß sehr effizient genutzt werden.

Die vorliegende Erfindung wird nachfolgend mit Bezug auf die beiliegenden Figuren detailliert beschrieben. Es zeigt:
- Fig. 1: in prinzipartiger Darstellung ein Antriebssystem eines Fahrzeugs;
- Fig. 2: eine Schnittdarstellung einer Abstützeinheit für eine Abgasanlage des Antriebssystems aus Fig. 1;
- Fig. 3: eine Draufsicht auf einen Rohling eines ersten Anbindungselements der Abstützeinheit der Fig. 2.

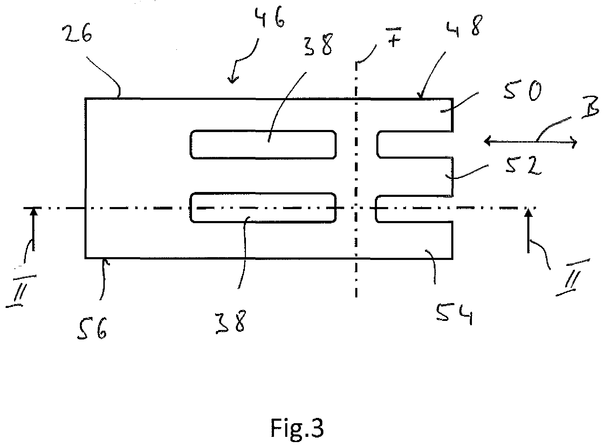

Nachfolgend wird mit Bezug auf die Fig. 2 und 3 der Aufbau einer erfindungsgemäßen Abstützeinheit, mit welcher eine Abgasanlage bezüglich einer Antriebseinheit eines Fahrzeugs abgestützt werden kann, detailliert beschrieben. Der Aufbau eines Fahrzeugs bzw. eines Antriebssystems, bei welchem eine derartige Abstützeinheit zum Einsatz gelangen kann, wurde vorangehend mit Bezug auf die Fig. 1 detailliert beschrieben, so dass hinsichtlich des Gesamtsystems, in welches eine erfindungsgemäße Abstützeinheit integriert werden kann, auf die diesbezüglichen Ausführungen zur Fig. 1 verwiesen werden kann.

Die Fig. 2 zeigt eine erfindungsgemäße Abstützeinheit 20, welche als wesentliche Systemkomponenten ein erstes Anbindungselement 26 sowie ein zweites Anbindungselement 28 aufweist. Die beiden Anbindungselemente 26, 28 sind durch ein Kopplungsorgan 30, hier ausgeführt als Schraubbolzen 32 mit Bolzenkopf 34 und aufgeschraubter Mutter 36, z.B. Käfigmutter, miteinander verbunden. Im ersten Anbindungselement 26 ist eine als Langloch ausgebildete erste Kopplungsorgandurchgriffsöffnung 38 ausgebildet. Im zweiten Anbindungselement 28 ist eine zweite Kopplungsorgandurchgriffsöffnung 40 ausgebildet.

Am ersten Anbindungselement 26 ist ein Kopplungsorganklemmbereich 42 ausgebildet, in welchem das erste Anbindungselement 26 eine größere Dicke aufweist, als in einem an den Kopplungsorganklemmbereich 42 anschließenden Kopplungsorganklemmfreigabebereich 44. Wie nachfolgend noch beschrieben, kann der Kopplungsorganklemmbereich 42 mit größerer Dicke dadurch bereitgestellt werden, dass ein in Fig. 3 dargestellter Rohling 46 für das erste Anbindungselement 26 um eine Faltlinie F gefaltet wird. Die als Langloch ausgebildete erste Kopplungsorgandurchgriffsöffnung 38 erstreckt sich mit einem ersten Längenbereich L1 im Kopplungsorganklemmbereich 42 und mit einem zweiten Längenbereich L2 im Kopplungsorganklemmfreigabebereich 44.

In dem in Fig. 2 dargestellten Kopplungszustand durchsetzt das Kopplungsorgan 30 die zweite Kopplungsorgandurchgriffsöffnung 40 in zweiten Anbindungselement 28 im Wesentlichen ohne Bewegungsspiel und durchsetzt die erste Kopplungsorgandurchgriffsöffnung 38 im ersten Anbindungselement 26 im Kopplungsorganklemmbereich 42 des ersten Anbindungselements 26. Durch Anziehen der Mutter 36 werden die beiden Anbindungselemente 26, 28 fest gegeneinander gepresst. Aufgrund des im Bereich der gegenseitigen Anlage der Anbindungselemente 26, 28 generierten Reibkraftschlusses und auch des im Bereich der Anlage der Mutter 36 am ersten Anbindungselement 26 generierten Reibkraftschlusses sind die beiden Anbindungselemente 26, 28 grundsätzlich fest miteinander verbunden. Um in diesem Zustand beispielsweise die Abgasanlage 18 fest bezüglich der Antriebseinheit 12 halten zu können, kann beispielsweise das erste Anbindungselement 26 durch Verschraubung, Verklemmung oder durch Materialschluss, beispielsweise Verschweißung, an der Abgasanlage 18 festgelegt werden. Das zweite Anbindungselement 28 kann in entsprechender Art und Weise beispielsweise am Getriebe 16 oder an der Brennkraftmaschine 14 festgelegt werden. Soll eine Abstützeinheit 20 zur Stabilisierung der Abgasanlage 18 in sich eingesetzt werden, so können beide Anbindungselemente 26, 28 jeweils an verschiedenen Bereichen der Abgasanlage 18 festgelegt werden. Dabei ist es beispielsweise auch möglich, dass zumindest eines der Anbindungselement 26, 28 an einem Anbindungselement einer anderen Abstützeinheit 20 angreift, wie dies in Fig. 1 gezeigt ist.

Trifft ein so aufgebautes Antriebssystem 12 auf ein Hindernis 22 und entstehen dabei aufgrund der Massenträgheit Kräfte zwischen der Antriebseinheit 12 und der Abgasanlage 18, so können unter Überwindung des vorangehend angesprochenen Reibungskraftschlusses die beiden Anbindungselemente 26, 28 bezüglich einander verschoben werden, wobei zunächst das Kopplungsorgan 30 sich im ersten Längenbereich L1 der ersten Kopplungsorgandurchgriffsöffnung 38 erstreckt, der im Kopplungsorganklemmbereich 42 liegt. Gelangt das Kopplungsorgan 30 in den Kopplungsorganklemmfreigabebereich 44, so wird die durch das Kopplungsorgan 30 generierte Klemmkraft vollständig aufgehoben und die beiden Anbindungselemente 26, 28 können sich im Wesentlichen kraftfrei weiter bezüglich einander verschieben. Die Abgasanlage 18 kann sich somit in einem der Längsausdehnung der ersten Kopplungsorgandurchgriffsöffnung 38 in einer Bewegungsrichtung B vom Kopplungsorganklemmbereich 42 zum Kopplungsorganklemmfreigabebereich 44 entsprechenden Ausmaß bezüglich der Antriebseinheit 12 verschieben. Lediglich im Bereich der direkten Anbindung der Abgasanlage an die Brennkraftmaschine 14 vermittels des Abgaskrümmers bleibt eine Kopplung bestehen. Aufgrund der gekrümmten Ausgestaltung des Abgaskrümmers ist dieser jedoch vergleichsweise leicht zu verformen.

Bei Bewegung der Antriebseinheit 12 in Richtung auf die Stirnwand 24 zu kann somit aufgrund der Bewegungsentkopplung der Abgasanlage 18 von der Antriebseinheit 12 ein Eindringen der Abgasanlage 20 in den Fahrzeuginnenraum vermieden werden. Hierzu trägt auch bei, dass ein oder mehrere Abstützeinheiten 20, welche die Abgasanlage 18 in sich abstützen und somit versteifen, gleichermaßen entkoppelt werden, so dass die Stabilität der Abgasanlage 18 in sich ebenfalls abnimmt und bei Aufprall der Abgasanlage 18 auf die Stirnwand 24 ein wesentlicher Teil der Energie auch dadurch abgeführt wird, dass die Abgasanlage 18 in sich verformt wird.

Es ist vorteilhaft, wenn die ersten Kopplungsorgandurchgriffsöffnungen 38 in einem Antriebssystem 10 so orientiert sind, dass bei einer primär zu erwartenden Krafteinleitungsrichtung der maximale Bewegungshub der Abgasanlage 18 bezüglich der Antriebseinheit 12 erreicht wird. Insbesondere ist es vorteilhaft, wenn die bzw. jede Abstützeinheit 20 so in einem Fahrzeug orientiert wird, dass die Längserstreckungsrichtung der ersten Kopplungsorgandurchgriffsöffnung 38, welche im Wesentlichen der Bewegungsrichtung B entspricht, in Fahrzeuglängsrichtung orientiert ist.

In Fig. 3 ist zu erkennen, dass in dem beispielsweise als Blechbauteil ausgebildeten Rohling 46 für das erste Anbindungselement 26 zwei erste Kopplungsorgandurchgriffsöffnungen 38 bezogen auf die Bewegungsrichtung B nebeneinander liegend vorgesehen sind. An einem Endbereich 48 des Rohlings 46 sind, bezogen auf die Bewegungsrichtung B, jeweils seitlich neben den ersten Kopplungsorgandurchgriffsöffnungen 38 Faltabschnitte 50, 52, 54 ausgebildet. Beim Falten des Rohlings 46 um die Faltlinie F werden die Faltabschnitte 50, 52, 54 so positioniert, dass sie jeweils seitlich neben den ersten Kopplungsorgandurchgriffsöffnungen 38 bzw. zwischen diesen positioniert sind. Da die Faltabschnitte 50, 52, 54 kürzer sind, als die ersten Kopplungsorgandurchgriffsöffnungen 38, ergibt sich die in Fig. 2 erkennbare Konfiguration, in welcher zur Bereitstellung des Kopplungsorganklemmbereichs 42 die Faltabschnitte 50, 52, 54 nur einen Teilbereich der ersten Kopplungsorgandurchgriffsöffnungen 38 in der Bewegungsrichtung B übergreifen und somit nur in diesem Teilbereich eine größere Dicke des ersten Anbindungselements 26 erzeugt wird. Um hier eine noch größere Dickenvariationen im Vergleich zum Kopplungsorganklemmfreigabebereich 44 erzeugen zu können, könnten die Faltabschnitte 50, 52, 54 auch mehrfach gefaltet werden.

Im zweiten Endbereich 56 kann der Rohling 46 so geformt bzw. gestaltet werden, dass er an einen der miteinander zu koppelnden Systembereiche, also beispielsweise die Abgasanlage 18 oder die Brennkraftmaschine 14 oder das Getriebe 16, angebunden werden kann.

Mit dem vorangehend beschriebenen Aufbau einer Abstützeinheit 20 wird es in einfacher, gleichwohl zuverlässiger Art und Weise möglich, eine Abgasanlage 18 an eine Antriebseinheit 12 anzubinden bzw. in sich selbst zu stabilisieren, gleichwohl jedoch eine Bewegungsentkopplung bereitzustellen, um somit im Falle eines Aufpralls auf ein Hindernis 22 ein durch die Zwangsverkopplung mit der Antriebseinheit 12 hervorgerufenes Eindringen der Abgasanlage 18 in einen Fahrzeug Innenraum zu vermeiden.

Wie bereits ausgeführt, können die Anbindungselemente aus Stahlmaterial, beispielsweise Stahlblechmaterial, aufgebaut sein. Auch Aluminium kann als Aufbaumaterial eingesetzt werden. In diesem Falle kann das erste Anbindungselement 26 mit seiner Dickenvariation zum Bereitstellen des Übergangs vom Kopplungsorganklemmbereich 42 zum Kopplungsorganklemmfreigabebereich 44 als massives Bauteil z.B. in einem Gussverfahren hergestellt werden.

Um die Anbindungselemente 26, 28 auch gegen Korrosion bzw. Hitzebelastung zu schützen, können sie alternativ zu einer grundsätzlich unbeschichteten Ausgestaltung auch mit einer Beschichtung überzogen sein. Selbstverständlich können die Anbindungselemente 26, 28 aus einem Teil geformt sein oder können mehrteilig aufgebaut sein. Um die Aufbauelemente einer erfindungsgemäßen Abstützeinheit 20 gegen übermäßige Temperaturbelastung zu schützen, können im Angrenzungsbereich derselben aneinander beispielsweise wärmeisolierende Elemente 56, wie Glimmerplättchen, Matten oder Platten aus wärmeisolierendem Material oder Faserverbundmaterial vorgesehen sein. Auch eine Ummantelung einzelner oder mehrerer der Aufbauelemente mit derartigem Material ist möglich. Zur Bereitstellung eines verbesserten Korrosionsschutzes können einzelne oder mehrere der Aufbauelemente einer erfindungsgemäßen Abstützeinheit 20 beispielsweise mit Teflon oder Kunststoffmaterial beschichtet sein. Auch eine Oberflächenbehandlung, beispielsweise Plasmabehandlung, Eloxieren, Galvanisieren, ist möglich. Grundsätzlich können die Aufbauelemente auch mit einer korrosionsschützenden Legierung überzogen werden. Auch die Zwischenlagerung von korrosionsschützenden Schichten, wie z. B. aus Glimmermaterial oder aus Gummimaterial, ist möglich.

Es sei abschließend darauf hingewiesen, dass an der vorangehend beschriebenen und in den Figuren dargestellten Abstützeinheit verschiedenste Variationen vorgenommen werden können. So können mehr oder weniger als zwei Kopplungsorgane zur Kopplung der beiden Anbindungselemente eingesetzt werden. Auch könnten beide Anbindungselemente so aufgebaut sein, wie das vorangehend beschriebene erste Anbindungselement. Im Kopplungszustand würden dann die beiden Kopplungsorganklemmbereiche einander überlappend positioniert werden. Der wesentliche Vorteil einer derartigen Ausgestaltung liegt darin, dass auch die zweiten Kopplungsorgandurchgriffsöffnungen als Langlöcher ausgestaltet sein könnten, was einen noch größeren Bewegungshub der Abgasanlage bezüglich der Antriebseinheit und somit eine noch bessere Entkopplung im Falle eines Aufpralls gewährleisten würde.

## Patentansprüche

1. Abstützeinheit zur Abstützung einer Abgasanlage eines Fahrzeugs, umfassend ein erstes Anbindungselement (26), ein zweites Anbindungselement (28) und wenigstens ein das erste Anbindungselement (26) mit dem zweiten Anbindungselement (28) koppelndes Kopplungsorgan (30), wobei in Zuordnung zu dem wenigstens einen Kopplungsorgan (30) im ersten Anbindungselement (26) eine erste Kopplungsorgandurchgriffsöffnung (38) vorgesehen ist und im zweiten Anbindungselement (28) eine zweite Kopplungsorgandurchgriffsöffnung (40) vorgesehen ist und wobei das wenigstens eine Kopplungsorgan (30) die diesem zugeordnete erste Kopplungsorgandurchgriffsöffnung (38) und zweite Kopplungsorgandurchgriffsöffnung (40) durchsetzt, wobei wenigstens bei dem ersten Anbindungselement (26) in einem ersten Längenbereich (L1) wenigstens einer ersten Kopplungsorgandurchgriffsöffnung (38) ein Kopplungsorganklemmbereich 42) vorgesehen ist, **dadurch gekennzeichnet, dass** in einem zweiten Längenbereich (L2) dieser ersten Kopplungsorgandurchgriffsöffnung (38) ein Kopplungsorganklemmfreigabebereich (44) vorgesehen ist, wobei der Kopplungsorganklemmbereich (42) eine größere Dicke aufweist als der Kopplungsorganklemmfreigabebereich (44).

2. Abstützeinheit nach Anspruch 1, **dadurch gekennzeichnet, dass** die wenigstens eine erste Kopplungsorgandurchgriffsöffnung (38) ein Langloch ist, und dass der erste Längenbereich (L1) und der zweite Längenbereich (L2) in einer Langloch-Längsrichtung aufeinander folgen.

3. Abstützeinheit nach Anspruch 1 oder 2, **dadurch gekennzeichnet, dass** das erste Anbindungselement (26) im Kopplungsorganklemmbereich (42) mit größerer Materialstärke ausgebildet ist als im Kopplungsorganklemmfreigabebereich (44).

4. Abstützeinheit nach einem der Ansprüche 1-3, **dadurch gekennzeichnet, dass** das erste Anbindungselement (26) zum Bereitstellen des Kopplungsorganklemmbereichs (42) wenigstens einmal gefaltet ist.

5. Abstützeinheit nach Anspruch 4, **dadurch gekennzeichnet, dass** an dem ersten Anbindungselement (26) wenigstens ein durch Falten neben einer ersten Kopplungsorgandurchgriffsöffnung (38) positionierter Faltabschnitt (50,52,54) zum Bereitstellen des Kopplungsorganklemmbereichs (42) vorgesehen ist.

6. Abstützeinheit nach einem der Ansprüche 1-5, **dadurch gekennzeichnet, dass** im ersten Anbindungselement (26) eine Mehrzahl von ersten Kopplungsorgandurchgriffsöffnungen (38) vorgesehen ist.

7. Abstützeinheit nach Anspruch 6 **dadurch gekennzeichnet, dass** die ersten Kopplungsorgandurchgriffsöffnungen (38) bezogen auf eine Kopplungsorgan-Bewegungsrichtung (B) vom Kopplungsorganklemmbereich (42) zum Kopplungsorganklemmfreigabebereich (44) nebeneinander angeordnet sind.

8. Abstützeinheit nach Anspruch 5 und Anspruch 7, **dadurch gekennzeichnet, dass** zwischen wenigstens zwei ersten Kopplungsorgandurchgriffsöffnungen (38) ein Faltabschnitt (52) positioniert ist.

9. Abstützeinheit nach einem der Ansprüche 1-8, **dadurch gekennzeichnet, dass** wenigstens das erste Anbindungselement (26) als Blechteil bereitgestellt ist.

10. Antriebssystem für ein Fahrzeug, umfassend eine Antriebseinheit (12) mit einer Brennkraftmaschine (14) und eine Verbrennungsabgase von der Brennkraftmaschine (14) weg führende Abgasanlage (18), ferner umfassend wenigstens eine Abstützeinheit (20) nach einem der vorangehenden Ansprüche.

11. Antriebssystem nach Anspruch 10, **dadurch gekennzeichnet, dass** wenigstens eine Abstützeinheit (20) zur Abstützung der Abgasanlage (18) bezüglich der Brennkraftmaschine (14) angeordnet ist, oder/und dass die Antriebseinheit (12) ein Getriebe (16) umfasst und wenigstens eine Abstützeinheit (20) zur Abstützung der Abgasanlage (18) bezüglich des Getriebes (16) angeordnet ist, oder/und dass wenigstens eine Abstützeinheit (20) zur Abstützung eines ersten Bereichs der Abgasanlage (18) bezüglich eines zweiten Bereichs der Abgasanlage (18) angeordnet ist.

12. Antriebssystem nach Anspruch 10 oder 11, **dadurch gekennzeichnet, dass** bei wenigstens einer Abstützeinheit (20) eine Kopplungsorgan-Bewegungsrichtung (B) vom Kopplungsorganklemmbereich (42) zum Kopplungsorganklemmfreigabebereich (44) im Wesentlichen einer Fahrzeuglängsrichtung eines das Antriebssystem (10) aufweisenden Fahrzeugs entspricht.

## Claims

1. Support unit for supporting an exhaust system of a vehicle, comprising a first connecting member (26), a second connecting member (28) and a coupling member (30) coupling the first connecting member (26) and the second connecting member (28), wherein a first coupling member through opening (38) is provided in the first connecting member (26) in association to the at least one coupling member (30) and a second coupling member through opening (40) is provided in the second coupling member (28) and wherein the at least one coupling member (30) passes through the associated first coupling member through opening (38) and the second coupling member through opening (40), wherein at least for the first connecting member (26) a coupling member clamping portion (42) is provided in a first length range (L1) of at least one first coupling member through opening (38), **characterised in that** a coupling member clamping release portion (44) is provided in a second length range (L2) of said first coupling member through opening (38), wherein the coupling member clamping portion (42) is thicker than the coupling member clamping release portion (44).

2. Support unit according to claim 1, **characterized in that** the at least one coupling member through opening (38) is an elongated hole and **in that** the first length range (L1) and the second length range (L2) follow each other in an elongated hole longitudinal direction.

3. Support unit according to claim 1 or 2, **characterized in that** the at least one connecting element (26) in the coupling member clamping portion (42) is adapted with a higher material thickness than in the coupling member clamping release portion (44).

4. Support unit according to one of claims 1-3, **characterized in that** the first connecting member (26) is folded at least once for providing the coupling member clamping portion (42).

5. Support unit according to claim 4, **characterized in that** at the first connecting element (26) at least one folding portion (50, 52, 54) positioned next to a first coupling member through opening (38) by folding is provided for forming said coupling member clamping portion (42).

6. Support unit according to one of claims 1-5, **characterized in that** a plurality of first coupling member through openings (38) is provided in the first coupling member (26).

7. Support unit according to claim 6, **characterized in that** the first coupling member through openings (38) are arranged next to each other in relation to a movement direction (B) of the coupling members from the coupling member clamping portion (42) to the coupling member clamping release portion (44).

8. Support unit according to claim 5 and claim 7, **characterized in that** a folding portion (52) is positioned between at least two first coupling member through openings (38).

9. Support unit according to one of claims 1-8, **characterized in that** at least the first coupling member (26) is provided as a sheet metal part.

10. Drive system for a vehicle, comprising a drive unit (12) with a combustion engine (14) and an exhaust system (18) removing exhaust gases from the combustion engine (14), further comprising at least one support unit (20) designed according to one of the preceding claims.

11. Drive system according to claim 10, **characterized in that** at least one support unit (20) is arranged for supporting the exhaust system (18) in relation to the combustion engine (14) or/and that the drive unit (12) comprises a transmission (16) and at least one support unit (20) for supporting the exhaust system (18) in relation to the transmission (16), or/and that at least one support unit (20) is arranged for supporting a first portion of the exhaust system (18) in relation to a second portion of the exhaust system (18).

12. Drive system according to claim 10 or 11, **characterized in that** in at least one support unit (20) a movement direction of the coupling member (B) from the coupling member clamping portion (42) to the coupling member clamping release portion (44) corresponds substantially to a vehicle longitudinal direction of a vehicle comprising the respective drive system (10).

## Revendications

1. Unité de support pour supporter un système d'échappement d'un véhicule, comprenant un premier membre de liaison (26), un deuxième membre de liaison (28) et au moins un membre d'accouplement (30) accouplant le premier membre de liaison (26) au deuxième membre de liaison (28), où en association audit au moins un membre d'accouplement (30) dans le premier membre de liaison (26) une première ouverture de passage de membre d'accouplement (38) est prévue et où dans le deuxième membre de liaison (28) une deuxième ouverture de passage de membre d'accouplement (40) est prévue et où ledit au moins un membre d'accouplement (30) passe à travers la première ouverture de passage de membre d'accouplement (38) et la deuxième ouverture de passage de membre d'accouplement (40) associées, où au moins chez le premier membre de liaison (26) dans une première zone de longueur (L1) d'au moins une première ouverture de passage de membre d'accouplement (38) une portion de serrage de membre d'accouplement (42) est prévue, **caractérisée en ce que** dans une deuxième zone de longueur (L2) de cette première ouverture de passage de membre d'accouplement (38) une portion de libération du serrage de membre d'accouplement (44) est prévue, la portion de serrage de membre d'accouplement (42) ayant une plus grande épaisseur que la portion de libération du serrage de membre d'accouplement (44).

2. Unité de support selon la revendication 1, **caractérisée en ce que** ladite au moins une première ouverture de passage de membre d'accouplement (38) est un trou oblong, et **en ce que** la première zone de longueur (L1) et la deuxième zone de longueur (L2) se succèdent dans un sens longitudinal du trou oblong.

3. Unité de support selon les revendications 1 ou 2, **caractérisée en ce que** le premier membre de liaison (26) a une plus grande épaisseur du matériau dans la portion de serrage de membre d'accouplement (42) que dans la portion de libération du serrage de membre d'accouplement (44).

4. Unité de support selon une des revendications 1-3, **caractérisée en ce que** le premier membre de liaison (26) est pliée au moins une fois pour prévoir la portion de serrage de membre d'accouplement (42).

5. Unité de support selon la revendication 4, **caractérisée en ce qu'**au premier membre de liaison (26) au moins une portion pliée (50, 52, 54) positionnée par pliage à côté d'une première ouverture de passage de membre d'accouplement (38) est prévue pour prévoir la portion de serrage de membre d'accouplement (42).

6. Unité de support selon une des revendications 1-5, **caractérisée en ce qu'**une pluralité de premières ouvertures de passage de membre d'accouplement (38) est prévue dans le premier membre de liaison (26).

7. Unité de support selon la revendication 6, **caractérisée en ce que** les premières ouvertures de passage de membre d'accouplement (38) sont arrangées côte à côte par rapport à un sens de mouvement de membre d'accouplement (B) de la portion de serrage de membre d'accouplement (42) à la portion de libération du serrage de membre d'accouplement (44).

8. Unité de support selon la revendication 5 et la revendication 7, **caractérisée en ce qu'**une portion pliée (52) est positionnée entre au moins deux premières ouvertures de passage de membre d'accouplement (38).

9. Unité de support selon une des revendications 1-8, **caractérisée en ce qu'**au moins le premier membre de liaison (26) est prévu sous forme de pièce en tôle.

10. Système d'entraînement d'un véhicule, comprenant une unité d'entraînement (12) avec un moteur à combustion interne (14) et un système d'échappement (18) éloignant des gaz d'échappement du moteur à combustion interne (14), comprenant en outre au moins une unité de support (20) selon une des revendications précédentes.

11. Système d'entraînement selon la revendication 10, **caractérisé en ce qu'**au moins une unité de support (20) est arrangée pour supporter le système d'échappement par rapport au moteur à combustion interne (14), ou/et que le système d'entraînement (12) comprend un engrenage (16) et au moins une unité de support (20) pour supporter le système d'échappement (18) par rapport à l'engrenage (16), ou/et qu'au moins une unité de support (20) est arrangée pour supporter une première portion du système d'échappement (18) par rapport à une deuxième portion du système d'échappement (18).

12. Système d'entraînement selon la revendication 10 ou 11, **caractérisé en ce que** chez au moins une unité de support (20) un sens de mouvement de membre d'accouplement (B) de la portion de serrage de membre d'accouplement (42) à la portion de libération du serrage de membre d'accouplement (44) correspond essentiellement à un sens longitudinal de véhicule d'un véhicule comprenant le système d'entraînement (10).
